(19) **Europäisches Patentamt / European Patent Office / Office européen des brevets**

(11) **EP 1 764 582 B1**

(12) **EUROPEAN PATENT SPECIFICATION**

(45) Date of publication and mention of the grant of the patent:
**23.08.2017  Bulletin 2017/34**

(51) Int Cl.:
**G01C 22/00** *(2006.01)*

(21) Application number: **06120837.7**

(22) Date of filing: **18.09.2006**

(54) **Apparatus and method for detecting steps in a personal navigation system**

Gerät und Verfahren zum Detektieren von Schritten in einem Personennavigationssystem

Appareil et procédé pour la détection de pas dans un système de navigation personnel

(84) Designated Contracting States:
**DE FR GB**

(30) Priority: **16.09.2005  KR 20050087118**

(43) Date of publication of application:
**21.03.2007  Bulletin 2007/12**

(73) Proprietors:
- **Samsung Electronics Co., Ltd.**
  **Suwon-si, Gyeonggi-do, 443-742 (KR)**
- **Seoul National University Industry Foundation**
  **Seoul (KR)**

(72) Inventors:
- **Lee, Jae-Myeon**
  **Samsung Electronics Co., Ltd.**
  **Gyeonggi-do (KR)**
- **Hong, Hyun-Su**
  **Samsung Electronics Co., Ltd.**
  **Gyeonggi-do (KR)**
- **Park, Kyong-Ha**
  **Samsung Electronics Co., Ltd.**
  **Gyeonggi-do (KR)**

- **Park, Chan-Gook**
  **Seoul Nat. Univ. Ind. Foundation**
  **Seoul (KR)**
- **Kim, Jin-Won**
  **Samsung Electronics Co., Ltd.**
  **Gyeonggi-do (KR)**

(74) Representative: **Grünecker Patent- und Rechtsanwälte**
**PartG mbB**
**Leopoldstraße 4**
**80802 München (DE)**

(56) References cited:
EP-A- 1 253 404         WO-A-99/44016
US-A- 5 583 776         US-A1- 2001 029 319
US-A1- 2004 064 286

- **MASE K ET AL: "Activity and location recognition using wearable sensors" IEEE PERVASIVE COMPUTING, IEEE SERVICE CENTER, LOS ALAMITOS, CA, US, vol. 1, no. 3, 1 January 2002 (2002-01-01), pages 24-32, XP011094944 ISSN: 1536-1268**

EP 1 764 582 B1

**Description**

The present invention relates to a personal navigation system, and more particularly, to an apparatus and a method for detecting steps in a personal navigation system.

Personal navigation systems are typically used for route guidance and position determination. Accordingly, personal navigation systems provide users with route information by detecting a user's present position.

Personal navigation systems are typically included in portable terminals such as portable phones, personal digital assistants (PDAs), portable GPS receivers, and the like. These personal navigation systems typically include a Global positioning system (GPS) receiver, an accelerometer, and a geomagnetic sensor. Some personal navigation systems can determine a user's stride based on GPS information and generate a navigation solution according to the assumed stride so as to provide a navigation service. Thus, precise step information is necessary in order to provide a precise navigation service. That is, stride detection is a very important factor in the personal navigation system.

An accelerometer held by or attached to a user can be used for step detection. As used herein, these "steps" correspond to a users steps and will hereinafter be referred to as "steps" or "step" unless context indicates otherwise. The accelerometer counts steps based on acceleration variation according to impacts generated when people walk or run. Accordingly, the acceleration variation must be precisely measured for the purpose of precise step detection.

However, if the acceleration variation is directly measured based on an acceleration signal generated from an acceleration sensor, precision of the step detection will be degraded if the acceleration variation is not distinct. Accordingly, it is preferred to detect the steps when variation of the acceleration signal generated from the acceleration sensor is distinct and can be easily distinguished as will be explained below.

Conventionally, the acceleration sensor is attached to an item of clothing worn by a user and/or to the user's shoe, waist, or leg which generally experience great impact when the user walks or runs, thereby obtaining distinct acceleration variation for step detection. However, in this case, a sensor module must be located separately from a personal navigation terminal and a communication module must be provided for the purpose of data communication between the sensor module and the personal navigation terminal which can increase hardware complexity of the personal navigation system. A method for detecting steps in a hand-held state in which an acceleration sensor is installed in the personal navigation terminal typically attempts to detect a user's step in a state in which a user holds the personal navigation terminal in his or her hand.

If the acceleration sensor is installed in the personal navigation terminal, the sensor module may internally communicate with the personal navigation terminal. Accordingly, a separate communication module a user interface for interfacing the sensor module and the personal navigation terminal are not necessary. However, problems may occur because acceleration is measured in the hand-held state.

That is, if the acceleration is measured in the hand-held state, a shoulder or an elbow may serve as a damper, so that impact, corresponding to a user's foot making contact with the ground, may not be precisely transferred to the acceleration sensor. In this case, acceleration variation corresponding to a user's stride cannot be accurately measured, causing an error in step detection. Therefore, it is necessary to provide a technique capable of accurately measuring variation of an acceleration signal generated from an acceleration sensor.

Accordingly, the present invention has been made to solve the above-mentioned problems occurring in the prior art.

US 5,583,776 refers to a dead reckoning navigational system using accelerometer to measure foot impacts. This technique analyzes the frequency of a user's footstep to aid in the direction of future footsteps and, further, to aid in determining the size of the footsteps taken by the user. Displacement of a user on foot is determined by generating a set of accelerations corresponding to foot impact of the user on a surface, determining a peak acceleration in the set of accelerations, comparing the peak accelerations to a predetermined minimum threshold value, comparing, if the peak acceleration is above the predetermined minimum threshold value, determining a period of time from a previously detected footstep to the detected peak acceleration, determining whether the period of time is greater than a predetermined minimum threshold period of time, storing the determined peak acceleration as a detected footstep if the period of time is determined to be greater than the predetermined minimum threshold period of time, and multiplying stored detected footsteps by a scale factor to thereby determine the displacement of the user on foot. Peak or step detection allows determination of distance directly by a scale factor. A sliding window of the data is maintained with an odd number of samples. Using an odd number of samples ensures that there is always a central sample.

Document EP 12153404 A2 discloses a pedestrian navigation system whereby steps are detected using a triaxial accelerometer unit. A sliding window is employed to detect peaks in the accelerometer data for each axis.

The object of the present invention is to provide an apparatus and a method for precisely detecting steps in a personal navigation system by processing an acceleration signal output from an acceleration sensor such that variation of the acceleration signal can be distinctly obtained.

This object is solved by the subject matter of the independent claims.

Preferred embodiments are defined in the dependent claims.

An aspect of the present invention is to provide an apparatus and a method for precisely detecting steps in a personal navigation system by processing an acceleration signal output from an acceleration sensor installed in a hand-held type personal navigation terminal such that variation of the acceleration signal can be distinctly obtained.

In order to accomplish the above, according to one aspect of the present invention, there is provided an apparatus for step detection in a personal navigation system, the apparatus includes an acceleration sensor for detecting acceleration in a movement direction and a gravity direction relative to a user and then outputting acceleration signals according to the detection result; and a moving distance measurement device for calculating sliding window summing data for the acceleration signals output from the acceleration sensor in the movement direction and the gravity direction so as to calculate a sum of the sliding window summing data, and then detecting steps of the user by using differential sliding window summing data.

According to another aspect of the present invention, there is provided a method for step detection in a personal navigation system, the method including obtaining acceleration signals from an acceleration sensor in a movement direction and a gravity direction relative to a user; calculating sliding window summing data corresponding to the acceleration signals of the acceleration sensor in the movement direction and the gravity direction; calculating a sum of the sliding window summing data, and differential sliding window summing data; and detecting steps of the user based on the differential sliding window summing data.

The present invention will be more apparent from the following detailed description taken in conjunction with the accompanying drawings, in which:

FIG. 1 is a block diagram illustrating the structure of a step detection apparatus in a personal navigation system according to an embodiment of the present invention;

FIG. 2 is a flowchart illustrating the procedure of step detection in a personal navigation system according to the present invention;

FIGs. 3A to 3C are graphs illustrating waveforms of acceleration signals generated from an acceleration sensor in X, Y, and Z-axis directions according to the present invention;

FIGs. 4A to 4C are graphs illustrating sliding window summing data relative to acceleration signals of X, Y and Z-axis directions according to the present invention;

FIG. 5 is a graph illustrating differential sliding window summing data according to the present invention; and

FIG. 6 is a graph illustrating a step detection result according to the present invention.

Hereinafter, preferred embodiments of the present invention will be described with reference to the accompanying drawings. Wherever possible, the same reference numbers will be used throughout the drawings to refer to the same or like parts. In addition, a detailed description of known functions and configurations incorporated herein will be omitted when it may make the subject matter of the present invention unclear. The terms used in the following description are defined by taking functions thereof into consideration, so the terms may vary depending on customs or intentions of a user/administrator. Thus, definitions of the terms used in this application should be construed in accordance with, and in conjunction with, the teachings of the present application.

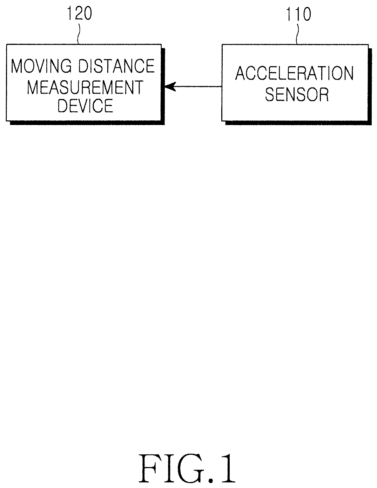

FIG. 1 is a block diagram illustrating the structure of a step detection apparatus in a personal navigation system according to the present invention. Referring to FIG. 1, the step detection apparatus includes an acceleration sensor 110 and a moving distance measurement device 120.

The acceleration sensor 110 may include an MEMS (micro electro mechanical system) sensor, that is, a micro sensor which can be installed in a personal navigation terminal, such as a portable phone or a PDA. The acceleration sensor 110 can detect acceleration in three axial directions and outputs a corresponding acceleration signal. According to the present invention, the acceleration sensor 110 may be implemented in the form of a tri-axial accelerometer or may include three single-axial accelerometers. On the assumption that the body of the personal navigation terminal is parallel to the ground in use, the acceleration sensor 110 is installed in the personal navigation terminal in such a manner that an X-axis is positioned along a lateral side (left or right direction) of a user, a Y-axis is positioned in a movement direction of the user, and a Z-axis is positioned in a gravity direction. At this time, although precise alignment of each axis is preferred in order to be consistent with the corresponding direction of the axis, since the acceleration component of a step (i.e., acceleration in the y axis in the present example) is more important than the movement direction (i.e., movement in the y axis in the present example) of the step in the present invention, the above axes can be slightly tilted in a predetermined range provided that the tilt does not exert a substantial influence upon acceleration signal detection. In addition, as mentioned above, the acceleration sensor 110 installed in the personal navigation terminal detects a linear movement in the X, Y and Z-axis directions and then outputs an acceleration signal according to the detection result.

The moving distance measurement device 120 may include a controller such as an 8-bit micro-controller (for example, an Atmega128 available from Atmel company). The moving distance measurement device 120 detects the step by using the acceleration signal output from the acceleration sensor 110. In particular, the moving distance measurement device 120 detects the step by adding the acceleration signal in the Y-axis direction to the acceleration signal in the Z-axis direction, because the acceleration signals in the Y and Z-axis directions can reflect a user's walking pattern. Since the phase of the acceleration signal in the Y-axis direction is similar to that of the acceleration signal in the Z-axis direction, when the above acceleration signals are added to each other, signal phases are overlapped with each other, so that substantial signal attenuation does not occur. Rather the signal value of each phase increases representing a distinct walking signal pattern

However, the acceleration signal output from the acceleration sensor 110 may include various errors in addition to noise. In particular, since each axis of the acceleration sensor 110 may be shaken when the acceleration sensor 110 is installed in the hand-held type personal navigation terminal, noise, bias and errors, such as a conversion coefficient error or a misalignment error, may become serious. The above parameters (noise, bias, conversion coefficient error, misalignment error, etc.) exert an influence upon the walk pattern, thereby disturbing the step detection.

Thus, the moving distance measurement device 120 according to the present invention performs a sliding window summing relative to the acceleration signals generated from the acceleration sensor 110 in X, Y, and Z-axis directions, thereby smoothing the acceleration signals in each axial direction while removing noise contained in the acceleration signals.

In addition, the moving distance measurement device 120 calculates the sum of sliding window summing data for the acceleration signals generated in the Y and Z-axis directions, thereby obtaining a distinct walking signal pattern.

However, although noise can be removed from the acceleration signal through the sliding window summing scheme, bias and various errors, such as the conversion coefficient error or the misalignment error, are not easily removed. Thus, the bias and various error components may be presented even if the sliding window summing data are added to each other.

For this reason, the moving distance measurement device 120 differentiates the sum of the sliding window summing data for the acceleration signals of the Y and Z-axis directions so as to remove the bias and errors presented in the sum of the sliding window summing data. As a result, the differential sliding window summing data may have acceleration signal components only, without the noise, bias and errors. Accordingly, the sliding window summing data may be sufficiently processed for representing the walk pattern.

Thus, the moving distance measurement device 120 detects a step by analyzing the pattern of the sliding window summing data. That is, the moving distance measurement device 120 detects a time when a signal of the sliding window summing data passes through a zero point by using a zero crossing method and then detects the step based on zero crossing detection.

However, the zero crossing detection can also be obtained by means of chattering (e.g., vibration) of a human body in addition to the step of the user. Thus, when it is detected that the signal of the sliding window summing data passes through the zero point, it must be determine whether the zero crossing detection is derived from the step of the user or chattering of the human body. In particular, since the user usually walks while holding the hand-held type personal navigation terminal having the acceleration sensor 110 therein, vibration may be applied to the hand-held type personal navigation terminal through a hand or an arm of the user. Accordingly, in the case of the hand-held type personal navigation terminal having the acceleration sensor 110 therein, it is necessary to determine whether the zero crossing detection is derived from the step of the user or chattering of the human body.

However, since the user walks with a predetermined stride, the zero crossing detection caused by the step of the user is presented with a predetermined interval. In contrast, the zero crossing detection caused by the chattering of the human body is presented several times with a relatively short interval because the chattering of the human body refers to vibration of the human body. Thus, it is possible to determine whether the zero crossing detection is derived from the step of the user or chattering of the human body based on the interval of the zero crossing detection. Therefore, the moving distance measurement device 120 according to the present invention calculates a difference of a detection time between present zero crossing detection and previous zero crossing detection and compares the difference value with a threshold value, thereby detecting the step. The threshold value can be obtained through experimentation.

According to the step detection apparatus having the above structure, the acceleration signals output from the acceleration sensor 110 are processed so as to obtain a distinct signal pattern for walk and then the step is detected based on the distinct signal pattern, so that the step of the user can be precisely detected. In addition, the step detection apparatus according to the present invention can distinguish zero crossing detection caused by chattering of the human body from zero crossing detection caused by the step of the user, so the step detection apparatus can more precisely detect the step of the user.

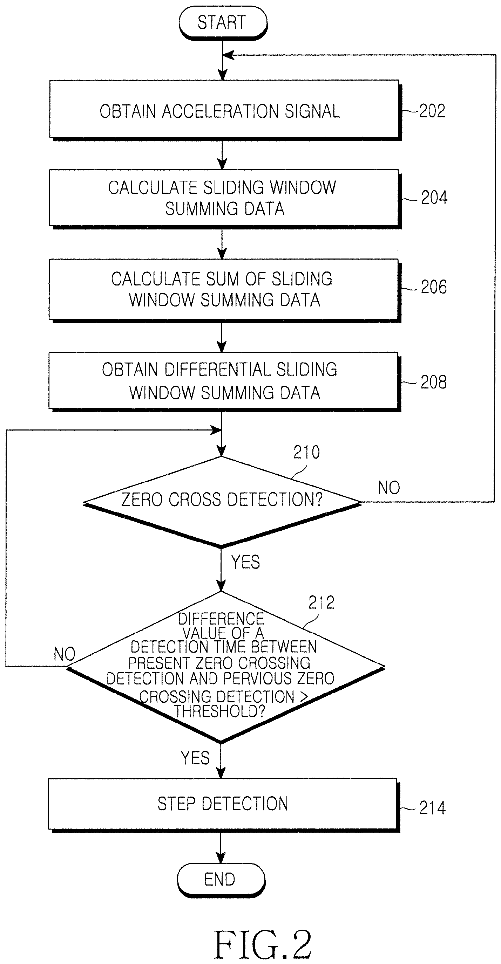

Hereinafter, the method for step detection in the above personal navigation system will be described with reference to FIG. 2 which is a flowchart illustrating the procedure of step detection in the personal navigation system according to the present invention.

Referring to FIG. 2, the moving distance measurement apparatus 120 detects the acceleration signal generated from the acceleration sensor 110 in X, Y, and Z-axis directions (step 202).

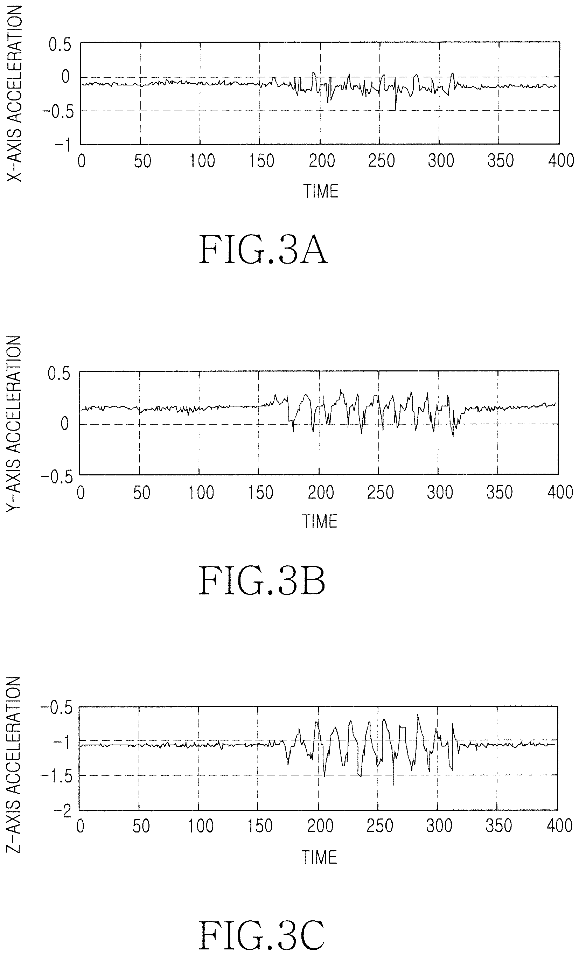

For instance, when the user walks 10-steps while holding the personal navigation terminal having the acceleration sensor 110 therein, the acceleration signals as shown in FIGs. 3A to 3C are generated from the acceleration sensor 110.

FIG. 3A is a graph illustrating a waveform of an acceleration signal generated in the X-axis direction (the lateral direction of the user), FIG. 3B is a graph illustrating a waveform of an acceleration signal generated in the Y-axis direction (the movement direction of the user), and FIG. 3C is a graph illustrating a waveform of an acceleration signal generated in the Z-axis direction (the gravity direction). In FIGS. 3A to 3C, a longitudinal axis represents acceleration and a transverse axis represents time.

Referring to FIG. 3A, variation of the acceleration signal waveform according to walking is negligible. However, referring to FIGS. 3B and 3C, walking variation of the acceleration signal waveform is greater than that of the acceleration signal waveform shown in FIG. 3A. Accordingly, it can be understood that the walk pattern of the user is greatly reflected in the acceleration signals of the Y and Z-axis directions.

Accordingly, the moving distance measurement device 120 preferably uses the acceleration signals of the Y and Z-axis directions representing greater variation of the waveforms.

After detecting the acceleration signals output from the acceleration sensor 110, the moving distance measurement device 120 calculates sliding window summing data relative to the acceleration signals by using a sliding window summing scheme (step 204). The sliding window summing scheme refers to a signal processing scheme for adding acceleration values of a window period to each other while sliding a window relative to a time axis.

At this time, the sliding window summing data for acceleration signals can be calculated according to Equation 1.

$$SWS(t) = \sum_{k=t-(N+1)}^{t} a(k) \dots\dots\dots\dots\dots\dots\dots\dots\dots\dots\dots\dots\dots\dots\dots\dots\dots\dots\dots\dots\dots\dots\dots\dots (1)$$

In Equation 1, t is time, N is a window size, a(k) is an acceleration signal value as a function of time (t), and SWS(t) is a value of sliding window summing.

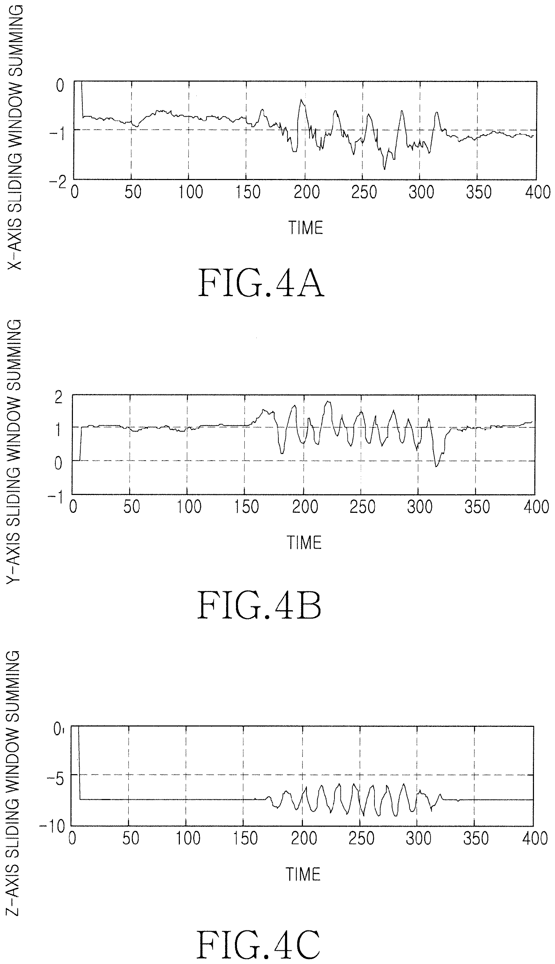

FIGs. 4A to 4C are graphs illustrating sliding window summing data relative to acceleration signals of X, Y, and Z-axis directions according to the present invention. The calculation results of the sliding window summing data are obtained by applying the acceleration signals of the acceleration sensor 110 to Equation 1.

FIG. 4A is a graph illustrating the calculation result of the sliding window summing data obtained by applying the sliding window scheme to the waveform of the acceleration signal in the X-axis direction. FIG. 4B is a graph illustrating the calculation result of the sliding window summing data obtained by applying the sliding window scheme to the waveform of the acceleration signal in the Y-axis direction. FIG. 4C is a graph illustrating the calculation result of the sliding window summing data obtained by applying the sliding window summing scheme to the waveform of the acceleration signal in the Z-axis direction. In FIGS. 4A to 4C, a longitudinal axis represents sliding window summing and a transverse axis represents time.

When comparing FIGS. 4A to 4C with FIGS. 3A to 3C, it can be understood that noise is removed from the acceleration signals in the X, Y and Z-axis directions, if the sliding window summing scheme is applied to the waveforms of the acceleration signals.

After removing noise from the acceleration signals generated from the acceleration sensor 110, the moving distance measurement device 120 calculates the sum of sliding window summing data for the acceleration signals generated in the Y and Z-axis directions (step 206).

In this manner, since the sliding window summing data for the acceleration signals generated in the Y and Z-axis directions, which reflect the walk pattern of the user, are added to each other, it is possible to obtain the distinct walking signal pattern.

After that, the moving distance measurement device 120 differentiates the sliding window summing data for the acceleration signals generated in the Y and Z-axis directions according to Equation 2 (step 208).

$$SWS(t) = SWS_0(t) + SWS_\varepsilon(t)$$
$$\Delta SWS(t) = SWS(t) - SWS(t-1) = SWS_0(t) - SWS_0(t-1) \quad \dots\dots\dots\dots\dots\dots\dots (2)$$

In Equation 2, $\Delta SWS(t)$ is the differential sliding window summing data, $SWS_0(ti)$ is the sliding window summing data for acceleration signals in which errors have been removed, and $SWS_\varepsilon(t)$ is the sliding window summing data for error components contained in acceleration signals.

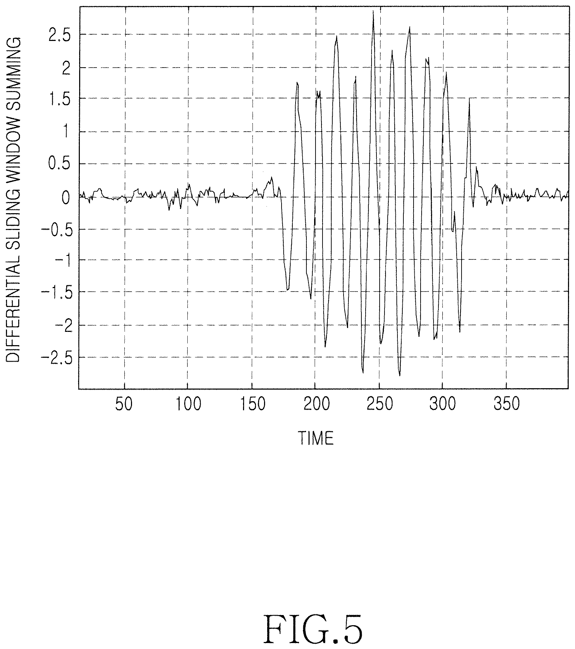

The result of differential sliding window summing data obtained according to Equation 2 is shown in FIG. 5. In FIG. 5, a longitudinal axis represents differential sliding window summing data and a transverse axis represents time.

Referring to FIG. 5, the waveform of the differential sliding window summing data represents an acceleration signal component in which noise, bias and errors have been removed, so that the distinct signal pattern for walk can be obtained. Accordingly, the above differential sliding window summing data signifies that the acceleration signals are sufficiently processed to represent the distinct signal pattern corresponding to a user's walk.

After that, the moving distance measurement device 120 detects a zero crossing point on the basis of the differential sliding window summing data by using the walk pattern in order to detect the step of the user (step 210). That is, the moving distance measurement device 120 detects a time when a signal of the sliding window summing data passes through the zero point by using the zero crossing method, thereby detecting the zero crossing point. As mentioned above, the zero crossing may occur caused by the step of the user or chattering of the human body.

Accordingly, in order to determine whether the zero crossing detection is caused by the step of the user or chattering of the human body, the moving distance measurement device 120 compares a difference value of a detection time between present zero crossing detection and previous zero crossing detection with a threshold value (step 212). The threshold value can be obtained through experimentation. According to the present invention, the threshold value is about 15 samples (0.3 second) based on a data rate of (50 Hz). If the difference value of the detection time between present zero crossing detection and previous zero crossing detection is equal to or less than the threshold value, the moving distance measurement device 120 determines that the zero crossing detection occurs caused by chattering of the human body, so the procedure returns to step 210. However, if the difference value of the detection time between present zero crossing detection and previous zero crossing detection is greater than the threshold value, the moving distance measurement device 120 determines that the zero crossing detection occurs caused by the step of the user (step 214).

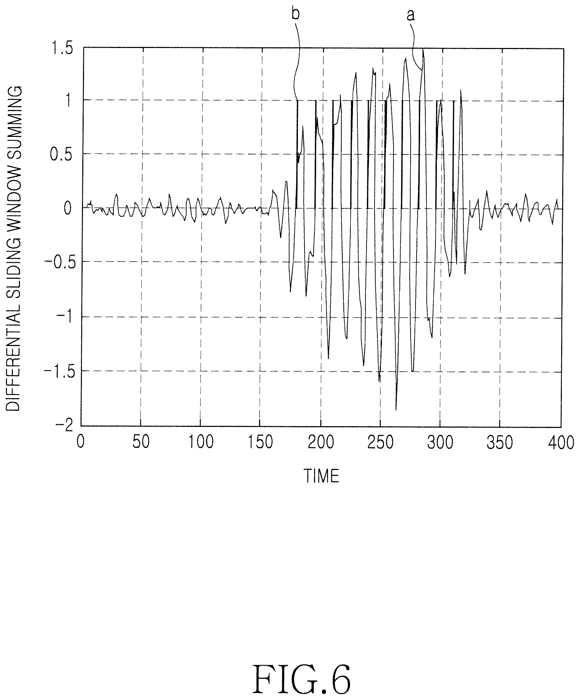

For example, FIG. 6 is a graph illustrating the step detection result according to the present invention. Referring to FIG. 6, "a" is a waveform of differential sliding window summing data and "b" is a point where the zero crossing detection occurs. It can be precisely detected that the user walks 10-steps by counting the point where the zero crossing detection occurs.

While the invention has been shown and described with reference to certain preferred embodiments thereof, it will be understood by those skilled in the art that various changes in form and details may be made therein without departing from the scope of the invention as defined by the appended claims.

For example, although the present invention has been described that the sum of the sliding window summing data for acceleration signals in the Y and Z-axis directions is calculated after the sliding window summing data for acceleration signals in the X, Y and Z-axis directions have been calculated, it is also possible to calculate the sum of the acceleration signals in the Y and Z-axis directions before the sliding window summing data have been calculated. In this case, the sliding window summing scheme is applied to the sum of the acceleration signals.

As described above, according to the present invention, the acceleration signals generated from the acceleration sensor are processed such that the distinct walking signal pattern can be obtained, thereby precisely detecting the step of the user based on the distinct signal pattern.

In addition, the step detection apparatus according to the present invention can distinguish zero crossing detection caused by chattering of the human body from zero crossing detection caused by the step of the user, so the step detection apparatus can more precisely detect the step of the user.

Furthermore, according to the algorithm of the present invention, it is possible to precisely detect the step of the user in a hand-held type personal navigation system including a micro sensor module and a portable phone or a PDA.

## Claims

1. An apparatus for step detection in a personal navigation system, the apparatus comprising:

   an acceleration sensor (110) adapted to detect acceleration of a user in X, Y and Z-axis directions and then to output acceleration signals according to the detection result, wherein the Y-axis direction corresponds to a movement direction of the user, the X-axis direction corresponds to a lateral movement of the user relative to said movement direction and the Z-axis direction corresponds to a gravity direction; and
   a moving distance measurement device (120) adapted to apply a sliding window summing scheme to each acceleration signal in the X, Y and Z-axis directions to respectively calculate sliding window summing data, to calculate a sum of sliding window summing data for the acceleration signals generated in the Y and Z-axis directions, to differentiate the sum of the sliding window summing data for the acceleration signals of the Y and Z-axis directions and to detect a zero crossing point based on the differential sliding window summing data and then to compare a difference of a detection time between a present zero crossing point and a previous zero crossing point with a threshold value, thereby detecting steps of the user.

2. The apparatus as claimed in claim 1, wherein the threshold value is a reference time for determining whether the zero crossing point is detected according to a step of the user or chattering of a human body.

3. The apparatus as claimed in one of claims 1 or 2, wherein the personal navigation system includes a hand-held type personal navigation system having the acceleration sensor (110) therein.

4. The apparatus as claimed in claim 3, wherein the acceleration sensor (110) is further adapted to generate acceleration signals in at least two axial directions.

5. The apparatus as claimed in claim 4, wherein, in a state in which a body of the personal navigation system is parallel to a ground, the acceleration sensor is installed in the personal navigation system terminal in such a manner that at least two axes of the acceleration sensor (110) are substantially aligned in the X, Y and Z-axis directions relative to the user.

6. A method for step detection in a personal navigation system, the method comprising:

obtaining (202) acceleration signals from an acceleration sensor (110) in X, Y and Z-axis directions, wherein the Y-axis direction corresponds to a movement direction of the user, the X-axis direction corresponds to a lateral movement of the user relative to said movement direction and the Z-axis direction corresponds to a gravity direction;
calculating (204) sliding window summing data for the acceleration signals of the acceleration sensor in said X, Y and Z-axis directions;
calculating (206) a sum of the sliding window summing data for the acceleration signals obtained for the Y and Z-axis directions and generating differential sliding window summing data of the calculated sum;
detecting (210) a zero crossing point based on the differential sliding window summing data;
comparing (212) a difference of a detection time between a present zero crossing point and a previous zero crossing point with a threshold value; and
detecting (214) steps of the user according to the comparison result.

7. The method as claimed in claim 6, wherein the comparing step (212) includes:

obtaining the difference of the detection time between the present zero crossing point and the previous zero crossing point; and
determining if the difference is greater than the threshold value.

8. The method as claimed in claim 7, wherein it is determined as zero crossing detection caused by steps of the user when the difference is greater than threshold value, and it is determined as zero crossing detection caused by chattering when the difference is equal to or less than the threshold value.

9. The method as claimed in one of claims 6 to 8, wherein the threshold value is a reference time for determining whether the zero crossing point is detected according to a step of the user or chattering of a human body.

10. The method as claimed in one of claims 6 to 9, wherein the personal navigation system includes a hand-held type personal navigation system having the acceleration sensor (110) therein.

11. The method as claimed in claim 10, wherein the acceleration sensor (110) generates acceleration signals in at least two axial directions.

12. The method as claimed in claim 11, wherein, in a state in which a body of the personal navigation system is parallel to a ground, the acceleration sensor (110) is installed in the personal navigation system terminal in such a manner that at least two axes of the acceleration sensor (110) are substantially aligned in the X, Y and Z-axis directions relative to the user, respectively.

**Patentansprüche**

1. Gerät zur Erfassung von Schritten in einem Personennavigationssystem, wobei das Gerät umfasst:

einen Beschleunigungssensor (110), der die Beschleunigung eines Benutzers in Richtung der X-, Y- und Z-Achse detektieren und dann Beschleunigungssignale nach dem Detektionsergebnis ausgeben soll, wobei die Richtung der Y-Achse einer Bewegungsrichtung des Benutzers entspricht, die Richtung der X-Achse einer seitlichen Bewegung des Benutzers relativ zu der Bewegungsrichtung entspricht, und die Richtung der Z-Achse einer Schwerkraftrichtung entspricht; und

eine Bewegungsentfernungs-Messvorrichtung (120), die gestaltet ist, ein Gleitfenster-Summierprogramm auf jedes Beschleunigungssignal in Richtung der X-, Y- und Z-Achse anzuwenden, um jeweils Gleitfenster-Summierdaten zu berechnen, eine Summe von Gleitfenster-Summierdaten für die in Richtung der Y- und Z-Achse erzeugten Beschleunigungssignale zu berechnen, die Summe der Gleitfenster-Summierdaten für die Beschleunigungssignale in Richtung der Y- und Z-Achse zu differenzieren und einen Nulldurchgangspunkt basierend auf den differenziellen Gleitfenster-Summierdaten zu detektieren und anschließend eine Differenz einer Detektionszeit zwischen einem vorhandenen Nulldurchgangspunkt und einem vorherigen Nulldurchgangspunkt mit einem Schwellenwert zu vergleichen, wodurch Schritte des Benutzers erfasst werden.

2. Gerät nach Anspruch 1, wobei der Schwellenwert eine Referenzzeit zur Bestimmung ist, ob der Nulldurchgangspunkt entsprechend einem Schritt des Benutzers oder dem Zittern eines menschlichen Körpers detektiert ist.

3. Gerät nach einem der Ansprüche 1 oder 2, wobei das Personennavigationssystem ein handgehaltenes Personennavigationssystem einschließt, das darin den Beschleunigungssensor (110) aufweist.

4. Gerät nach Anspruch 3, wobei der Beschleunigungssensor (110) des Weiteren gestaltet ist, Beschleunigungssignale in mindestens zwei axialen Richtungen zu erzeugen.

5. Gerät nach Anspruch 4, wobei in einem Zustand, bei dem ein Körper des Personennavigationssystems sich parallel zu einem Boden befindet, der Beschleunigungssensor im Personennavigationssystemendgerät derart eingebaut ist, dass zumindest zwei Achsen des Beschleunigungssensors (110) im Wesentlichen in Richtung der X-, Y- und Z-Achse relativ zu dem Benutzer ausgerichtet sind.

6. Verfahren zur Erfassung von Schritten in einem Personennavigationssystem, wobei das Verfahren umfasst:

Erhalten (202) von Beschleunigungssignalen von einem Beschleunigungssensor (110) in Richtung der X-, Y- und Z-Achse, wobei die Richtung der Y-Achse einer Bewegungsrichtung des Benutzers entspricht, die Richtung der X-Achse einer seitlichen Bewegung des Benutzers relativ zur Bewegungsrichtung entspricht, und die Richtung der Z-Achse einer Richtung der Schwerkraft entspricht;
Berechnen (204) von Gleitfenster-Summierdaten für die Beschleunigungssignale des Beschleunigungssensors in Richtung der X-, Y- und Z-Achse;
Berechnen (206) einer Summe der Gleitfenster-Summierdaten für die für die Richtung der Y- und Z-Achse erhaltenen Beschleunigungssignale und Erzeugen von differenziellen Gleitfenster-Summierdaten der berechneten Summe;
Detektieren (210) eines Nulldurchgangspunktes basierend auf den differenziellen Gleitfenster-Summierdaten;
Vergleichen (212) der Differenz einer Detektionszeit zwischen einem vorhandenen Nulldurchgangspunkt und einem vorherigen Nulldurchgangspunkt mit einem Schwellenwert; und
Detektieren (214) von Schritten des Benutzers nach dem Vergleichsergebnis.

7. Verfahren nach Anspruch 6, wobei der Vergleichsschritt (212) umfasst:

Erhalten der Differenz der Detektionszeit zwischen dem vorhandenen Nulldurchgangspunkt und dem vorherigen Nulldurchgangspunkt; und
Bestimmen, ob die Differenz größer als der Schwellenwert ist.

8. Verfahren nach Anspruch 7, wobei es als durch Schritte des Benutzers verursachte Nulldurchgang-Erfassung bestimmt wird, wenn die Differenz größer als der Schwellenwert ist, und es als durch Zittern verursachte Nulldurchgang-Erfassung bestimmt wird, wenn die Differenz gleich oder kleiner als der Schwellenwert ist.

9. Verfahren nach einem der Ansprüche 6 bis 8, wobei der Schwellenwert eine Referenzzeit zur Bestimmung ist, ob der Nulldurchgangspunkt einem Schritt des Benutzers oder dem Zittern eines menschlichen Körpers entsprechend detektiert ist.

10. Verfahren nach einem der Ansprüche 8 bis 9, wobei das Personennavigationssystem ein handgehaltenes Personennavigationssystem einschließt, das den Beschleunigungssensor (110) darin aufweist.

**EP 1 764 582 B1**

**11.** Verfahren nach Anspruch 10, wobei der Beschleunigungssensor (110) Beschleunigungssignale in mindestens zwei axialen Richtungen erzeugt.

**12.** Verfahren nach Anspruch 11, wobei in einem Zustand, bei dem sich ein Gehäuse des Personennavigationssystems parallel zu einem Boden befindet, der Beschleunigungssensor (110) in dem Personennavigationssystemendgerät eingebaut ist, derart, dass zumindest zwei Achsen des Beschleunigungssensors (110) im Wesentlichen jeweils in Richtung der X-, Y- und Z-Achse relativ zu dem Benutzer ausgerichtet sind.

**Revendications**

**1.** Dispositif pour la détection de pas dans un système de navigation personnel, l'appareil comprenant:

un capteur d'accélération (110) prévu pour détecter l'accélération d'un utilisateur dans les directions des axes X, Y et Z, puis pour délivrer des signaux d'accélération en fonction du résultat de détection, dans lequel la direction de l'axe Y correspond à une direction de déplacement de l'utilisateur, la direction de l'axe X correspond à un mouvement latéral de l'utilisateur par rapport à ladite direction de déplacement et la direction de l'axe Z correspond à une direction de gravité; et
un dispositif de mesure de distance de déplacement (120) prévu pour appliquer un schéma de sommation de fenêtre coulissante à chaque signal d'accélération dans les directions des axes X, Y et Z pour calculer respectivement des données de sommation de fenêtre coulissante, pour calculer une somme de données de sommation de fenêtre coulissante pour les signaux d'accélération générés dans les directions des axes Y et Z, pour différencier la somme des données de sommation de fenêtre coulissante pour les signaux d'accélération des directions des axes Y et Z et pour détecter un point de passage par zéro en fonction des données différentielles de sommation de fenêtre coulissante et ensuite comparer une différence de temps de détection entre un point de passage par zéro présent et un point de passage par zéro précédent avec une valeur seuil, détectant ainsi les pas de l'utilisateur.

**2.** Appareil selon la revendication 1, dans lequel la valeur de seuil est un temps de référence pour déterminer si le point de passage par zéro est détecté selon un pas l'utilisateur ou le tremblement d'un corps humain.

**3.** Appareil selon l'une des revendications 1 ou 2, dans lequel le système de navigation personnel comprend un système de navigation personnel de type portatif contenant le capteur d'accélération (110).

**4.** Appareil selon la revendication 3, dans lequel le capteur d'accélération (110) est en outre prévu pour générer des signaux d'accélération dans au moins deux directions axiales.

**5.** Appareil selon la revendication 4, dans lequel, dans un état dans lequel un corps du système de navigation personnel est parallèle à un sol, le capteur d'accélération est installé dans le terminal du système de navigation personnel de telle manière qu'au moins deux axes du capteur d'accélération (110) sont sensiblement alignés dans les directions des axes X, Y et Z par rapport à l'utilisateur.

**6.** Procédé pour la détection de pas dans un système de navigation personnel, l'appareil comprenant:

l'obtention des signaux d'accélération à partir d'un capteur d'accélération (110) dans les directions des axes X, Y et Z, dans lequel la direction de l'axe Y correspond à une direction de déplacement de l'utilisateur, la direction de l'axe X correspond à un mouvement latéral de l'utilisateur par rapport à ladite direction de déplacement et la direction de l'axe Z correspond à une direction de gravité;
le calcul (204) des données de sommation de fenêtre coulissante pour les signaux d'accélération du capteur d'accélération dans les directions des axes X, Y et Z;
le calcul (206) d'une somme des données de sommation de fenêtre coulissante pour les signaux d'accélération obtenus pour les directions des axes Y et Z et la génération des données différentielles de sommation de fenêtre coulissante de la somme calculée;
la détection (210) d'un point de passage par zéro en fonction des données différentielles de sommation différentielle de la fenêtre coulissante;
la comparaison (212) d'une différence de temps de détection entre un point de passage par zéro actuel et un point de passage par zéro précédent avec une valeur de seuil; et
la détection (214) des pas de l'utilisateur en fonction du résultat de la comparaison.

**7.** Procédé selon la revendication 6, dans lequel l'étape de comparaison (212) consiste à:

obtenir la différence du temps de détection entre le point de passage par zéro actuel et le point de passage par zéro précédent; et

déterminer si la différence est supérieure à la valeur de seuil.

**8.** Procédé selon la revendication 7, dans lequel on détecte un passage par zéro provoqué par les pas de l'utilisateur lorsque la différence est supérieure à la valeur de seuil, et on détecte un passage par zéro provoqué par un tremblement lorsque la différence est égale ou inférieur à la valeur de seuil.

**9.** Procédé selon l'une quelconque des revendications 6 à 8, dans lequel la valeur de seuil est un temps de référence pour déterminer si le point de passage par zéro est détecté selon un pas l'utilisateur ou le tremblement d'un corps humain.

**10.** Procédé selon l'une des revendications 6 ou 9, dans lequel le système de navigation personnel comprend un système de navigation personnel de type portatif contenant le capteur d'accélération (110).

**11.** Procédé selon la revendication 10, dans lequel le capteur d'accélération (110) génère des signaux d'accélération dans au moins deux directions axiales.

**12.** Procédé selon la revendication 11, dans lequel, dans un état dans lequel un corps du système de navigation personnel est parallèle à un sol, le capteur d'accélération (110) est installé dans le terminal du système de navigation personnel de telle manière qu'au moins deux axes du capteur d'accélération (110) sont sensiblement alignés dans les directions des axes X, Y et Z par rapport à l'utilisateur, respectivement.

120

110

| MOVING DISTANCE MEASUREMENT DEVICE | ← | ACCELERATION SENSOR |

FIG.1

START

OBTAIN ACCELERATION SIGNAL — 202

CALCULATE SLIDING WINDOW SUMMING DATA — 204

CALCULATE SUM OF SLIDING WINDOW SUMMING DATA — 206

OBTAIN DIFFERENTIAL SLIDING WINDOW SUMMING DATA — 208

210 ZERO CROSS DETECTION? — NO

YES

212 DIFFERENCE VALUE OF A DETECTION TIME BETWEEN PRESENT ZERO CROSSING DETECTION AND PERVIOUS ZERO CROSSING DETECTION > THRESHOLD? — NO

YES

STEP DETECTION — 214

END

# FIG.2

FIG.3A

FIG.3B

FIG.3C

FIG.4A

FIG.4B

FIG.4C

FIG.5

FIG.6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5583776 A

- EP 12153404 A2